# FASCICULE DE BREVET EUROPEEN

(11) **EP 1 960 758 B1**
(45) Date de publication et mention de la délivrance du brevet: **14.09.2011**
(21) Numéro de dépôt: 06806851.9
(22) Date de dépôt: 27.09.2006
(51) Int. Cl.: G01N 19/04, G01N 3/00, G01N 3/08

(54) **PLOT DE TRACTION POUR DISPOSITIF DE TEST D'ADHERENCE D'UN REVETEMENT SUR UN SUBSTRAT**
HAFTUNGSBELAG FÜR VORRICHTUNG ZUM TESTEN DER ANHAFTUNG EINER BESCHICHTUNG AUF EINEM SUBSTRAT
TRACTION PAD FOR DEVICE TESTING ADHESION OF A COATING ON A SUBSTRATE

(30) Priorité: 28.09.2005 FR 0552936
(43) Date de publication de la demande: 27.08.2008
(73) Titulaire: AIRBUS OPERATIONS (S.A.S), 31060 Toulouse (FR)
(72) Inventeur: REY, Stéphane, F-31410 Lavernose Lacasse (FR)
(74) Mandataire: Maupilier, Didier
(86) Numéro de dépôt international: PCT/EP2006/066803
(87) Numéro de publication internationale: WO 2007/036541

(56) Documents cités:
- EP-A- 0 433 512
- GB-A- 2 196 437
- US-A- 3 821 892
- US-A- 4 606 225
- US-A- 6 050 140

## Description

La présente invention est relative aux dispositifs servant à mesurer les qualités d'adhésions de revêtements tels que des peintures, des protections de surface, des colles ou des films adhésifs sur des substrats auxquels ils sont destinés ou de mesurer les qualités de cohésion de surfaces en général.

Plus particulièrement l'invention concerne une amélioration des plots de traction utilisés par de tels dispositifs et qui sont collés sur la surface dont les performances d'adhésion doivent être mesurées en exerçant une force d'arrachement par l'intermédiaire desdits plots de traction.

La connaissance des qualités d'adhésion d'un revêtement sur un substrat, par exemple une peinture sur son support de destination, ou de la cohésion de la surface d'un matériau est une donnée essentielle dans l'industrie car elle conditionne en grande partie le comportement des pièces et des assemblages de ces pièces dans leurs futurs environnements de fonctionnement.

Une méthode couramment utilisée pour déterminer de telles qualités d'adhésion d'un revêtement ou de cohésion de surface consiste à mesurer les efforts nécessaires pour provoquer sur une éprouvette d'essai l'arrachement d'un échantillon de revêtement du substrat sur lequel il a été déposé ou de parties de la surface d'un matériau.

Souvent les essais sont effectués sur des éprouvettes normalisées et suivent des protocoles parfaitement définis car il est utile de pouvoir reproduire les mesures de façon répétitive pour comparer efficacement les performances d'adhésion des différents couples revêtement-substrat.

Le principe général d'une telle mesure consiste à coller un plot rigide de surface de collage calibrée sur un échantillon de surface à évaluer, c'est à dire un substrat recouvert du revêtement suivant le procédé d'application prévu ou un échantillon de matière ayant subi des traitements de surface, et, après la prise de la colle, à effectuer une traction sur le plot jusqu'à arrachement du revêtement de la surface du substrat ou de sa matière de surface.

La force correspondant à cet arrachement donne une mesure des qualités d'adhésion ou de cohésion recherchée.

La norme ISO 4624 décrit la procédure à mettre en oeuvre pour que les résultats effectués par différents laboratoires d'essais puissent être comparés.

On trouve également des dispositifs de traction tels que celui décrit dans le brevet US 3 821 892 qui sont mis en oeuvre pour réaliser les essais en question.

Le dispositif décrit permet d'exercer une force de traction sur un plot collé en forme de diabolo et est équipé des moyens de mesure de l'effort de traction appliqué.

Toutefois s'il est clair que le plot est collé sur la surface testée, la norme se contente de préciser que la surface du plot collée doit être plate. Ainsi, tant dans la norme ISO 4624 que dans le brevet US 3 821 892, rien n'incite à prévoir une surface de collage du plot autrement que plane, forme qui est même explicitement demandée. Lorsque la forme du plot de traction est abordée, telle que sa forme en diabolo dans le brevet US 3 821 892, il ne s'agit que d'assurer une bonne préhension du plot par les moyens de traction.

L'expérience montre que la qualité des résultats obtenus lors de la mise en oeuvre de la norme ISO 4624 est très liée à la qualité du collage du plot et à la qualité de préparation de l'essai. La plupart du temps ces qualités de préparation et de collage ne sont pas totalement satisfaisantes ce qui a pour effet de perturber fortement les mesures des forces d'arrachement.

Premièrement, en raison de la fluidité de la colle au moment où le plot est collé sur la surface à essayer, il est très difficile de contrôler l'épaisseur du film de colle et en particulier d'avoir une épaisseur uniforme de ce film entre la surface inférieure du plot et la surface soumise à l'essai. Du fait d'une épaisseur non maîtrisée et de la possibilité d'un affaissement latéral du plot, l'axe du plot peut avoir une orientation décalée par rapport à la normale à la surface de l'éprouvette d'essai qui est la direction de la traction sur le plot pendant l'essai. En pratique, une déviation, même de faible valeur, de l'axe du plot par rapport à l'axe de traction et la variation d'épaisseur du film de colle à l'interface entre le plot de traction et le revêtement testé affectent sensiblement la valeur de la force mesurée au moment de l'arrachement, effet d'autant plus gênant que par son côté aléatoire il conduit à une dispersion significative des mesures.

Pour prendre en compte ce phénomène, l'opérateur des essais est en général conduit à multiplier les essais un grand nombre de fois pour fournir des valeurs moyennes des efforts à l'arrachement qui soient exploitables.

Deuxièmement, un bourrelet de colle se forme autour du plot au moment du collage dudit plot. Ce bourrelet est formé par la colle fluide qui est chassée latéralement au moment où le plot est appuyé sur la surface devant faire l'objet de l'essai pour assurer une bonne adhésion du plot. La procédure d'essai prévoit que le revêtement soumis à l'essai d'arrachement soit découpé suivant le contour du plot afin que seule la surface d'adhérence du revêtement déposé sur le substrat en vis à vis du plot soit prise en compte dans la mesure des efforts à l'arrachement. Une entaille dans le revêtement est donc effectuée autour du plot, ce qui nécessite l'élimination préalable du bourrelet de colle. Ce bourrelet de colle, durci à ce stade des opérations de préparation de l'éprouvette d'essai, demande pour son élimination l'application d'efforts importants sur le plot lui-méme. Il est fréquent qu'au cours de cette opération d'élimination du bourrelet de colle, les efforts appliqués provoquent un début de décollement du plot rendant l'éprouvette d'essai inapte à la réalisation de l'essai ou conduisent à des résultats de l'essai non significatifs et obligent donc à la réalisation d'une nouvelle éprouvette.

La présente invention se propose de résoudre ces problèmes de collage et de préparation de l'éprouvette d'essai par l'adoption d'un plot présentant des caractéristiques originales, sans que ces caractéristiques ne remettent en cause les moyens de traction et de mesure existants ni les procédures d'essai utilisées.

Suivant l'invention le plot de traction pour essais d'adhérence d'un revêtement sur un substrat comporte un axe de référence et une surface inférieure, ledit plot de traction étant fixé à la surface du revêtement avant essai au moyen d'une colle. Le dit plot est caractérisé en ce qu'il comporte de plus, sur la surface inférieure destinée à être collée sur le revêtement, un lamage dont la profondeur correspond sensiblement à l'épaisseur de colle recherchée pour fixer le plot de traction au revêtement et des moyens de maintien à distance du fond du lamage pour assurer la stabilité du plot de traction et le maintien de son axe perpendiculaire au plan défini par la surface du revêtement à tester lorsque la surface inférieure du plot est appliquée sur la surface du revêtement.

Dans un mode préféré de réalisation, le lamage est de profondeur sensiblement constante.

Les moyens de maintien à distance sont constitués par une bordure à la surface inférieure du plot de traction. Cette bordure est de préférence à la périphérie de ladite surface inférieure.

Dans une autre forme de réalisation, les moyens de maintien à distance sont constitués de cales d'écartement réparties à la surface inférieure du plot de traction, sur le périmètre de ladite surface inférieure. Les surfaces inférieures desdites cales en contact avec la surface de revêtement à tester constituent le plan de pose du plot.

Quelle que soit la forme de réalisation du plot, les moyens de maintien à distance peuvent être obtenus en laissant de la matière du plot de traction lors de la réalisation du lamage.

Dans un mode de réalisation de l'invention, le plot de traction comporte des moyens aptes à laisser fluer l'excédant de colle en dehors de la zone de collage définie par l'empreinte du plot de traction sur la surface du revêtement. Ainsi, le surplus de colle est évacué en dehors du périmètre de collage du plot sans que ces moyens ne viennent perturber la régularité de l'épaisseur du film de colle. Dans une première variante, ces moyens ont la forme de passages libres ménagés dans la bordure de la surface inférieure du plot. Dans une deuxième variante de réalisation, ces moyens sont ménagés entre les cales d'écartement. Enfin, dans une troisième variante de réalisation, ces moyens consistent en une ou plusieurs cheminées d'échappement remontant dans le corps du plot de traction. De préférence, au moins une desdites cheminées d'échappement débouche à la surface extérieure du plot de traction, dans une partie dudit plot au dessus du fond du lamage. Une au moins des cheminées peut, de plus, déboucher dans une chambre d'expansion.

Quel que soit le mode de réalisation de l'invention, la surface inférieure du plot de traction comporte préférentiellement des irrégularités de surface. Ces irrégularités volontairement créées ou volontairement laissées améliorent l'adhérence de la colle à la surface inférieure du plot.

L'invention concerne aussi un procédé de collage d'un plot de traction sur un revêtement recouvrant un substrat au moyen d'une colle et comportant les étapes suivantes :
a) application de la colle sur la surface inférieure du plot de traction et/ou sur la surface du revêtement ;
b) avant durcissement de la colle, positionnement du plot de traction dans la position et à l'emplacement recherchés à la surface du revêtement en exerçant une pression suffisante pour faire fluer la colle;
c) attente du durcissement de la colle ;
d) réalisation d'une entaille dans le revêtement à la périphérie du plot de traction ;
   ledit procédé étant caractérisé en ce que :
e) le plot est conforme à l'une des revendications 1 à 14 ;
f) la pression exercée lors de l'étape b) est suffisante pour amener les moyens de maintien à distance en appui sur la surface du revêtement ;
g) les éventuels excédents de colle formant un bourrelet à la surface du revêtement autour du plot de traction sont éliminés entre les étapes b) et c) avant le durcissement de la colle et en maintenant le plot de traction par une pression suffisante pour éviter tout mouvement du plot de traction pendant l'opération d'élimination de l'excédent de colle pour éviter la formation d'un bourrelet de colle durcie ;

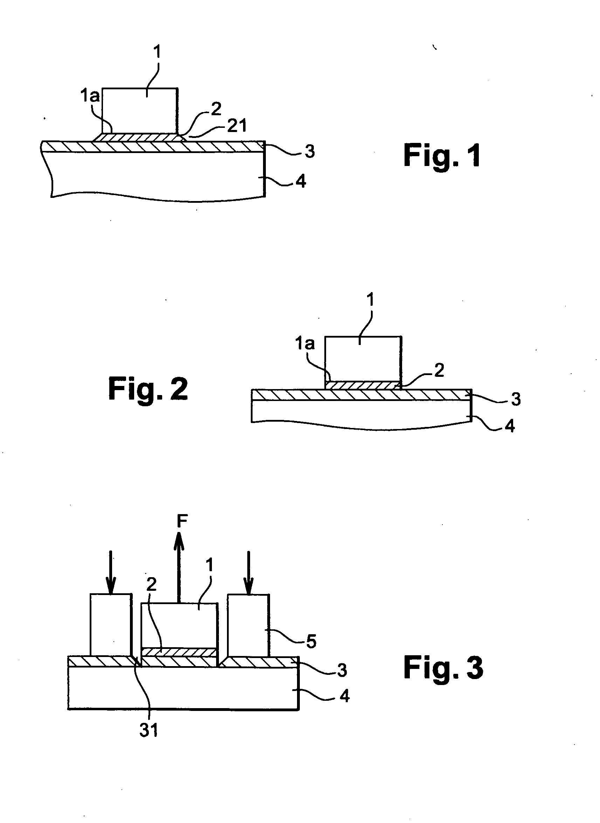

   Les figures 1 à 3 représentent les étapes de la pose d'un plot de traction de manière connue.
   Les figures 4a et 4b représentent un plot de traction suivant l'invention utilisant une bordure.
   Les figures 5a et 5b représentent un plot de traction suivant l'invention utilisant des cales d'écartement.
   La figure 6 représente un plot de traction suivant l'invention utilisant une bordure présentant des interruptions.
   La figure 7 représente un plot de traction suivant l'invention avec des cheminées d'échappement latérales.
   La figure 8 représente un plot de traction suivant l'invention avec une cheminée d'échappement verticale.
   La figure 9 représente un plot de traction suivant l'invention dont la cheminée d'échappement comporte une chambre d'expansion.

La présente description et les dessins présentent un plot de traction de forme essentiellement axisymétrique. Cette forme d'ensemble d'un plot de traction est relativement généralisée en raison de sa facilité de réalisation et est décrite dans la norme ISO 4624, mais l'invention est applicable à toute forme de plot de traction destiné à être collé soit sur un revêtement appliqué sur un substrat pour des essais d'adhérence, soit directement sur un matériau pour des essais de cohésion de surface.

Un plot de traction 1 comporte à sa base une surface 1a destinée à être collée sur un revêtement 3, couvrant un substrat 4, au moyen d'une colle 2.

Afin d'appliquer les efforts de traction F sur une surface du revêtement 3 dont la dimension est parfaitement délimitée, le revêtement 3 est découpé sur le pourtour du plot 1 par une entaille 31. L'objectif de cette entaille est que la traction F s'applique uniformément sur la surface du revêtement 3 testé en évitant que le revêtement 3 en dehors de la zone collée déterminée par la surface 1a de collage du plot de traction 1 n'interfère sur le résultat de la mesure, d'autant que des moyens 5 prenant appui autour du plot de traction 1 sont généralement utilisés pour appliquer des efforts de réaction à la force de traction F sur l'échantillon 4.

Pour éviter que l'axe 20 du plot de traction 1 en position collé ne s'écarte de la normale à la surface du revêtement 3, un lamage 11 est réalisé sur la surface inférieure du plot de traction 1 tout en préservant des éléments de maintien à distance 12, 13, du fond du lamage 11 a par rapport au plan de pose et de telle manière qu'il est garanti que l'épaisseur de colle 2 voulue soit maintenue entre le plot de traction 1 et le revêtement 3. Les dimensions et la disposition desdits éléments de maintien à distance 12, 13, sont choisis de manière à assurer au plot de traction 1 un plan de pose qui vient en contact avec la surface libre du revêtement 3 stable et perpendiculaire à l'axe 20 du plot de traction 1.

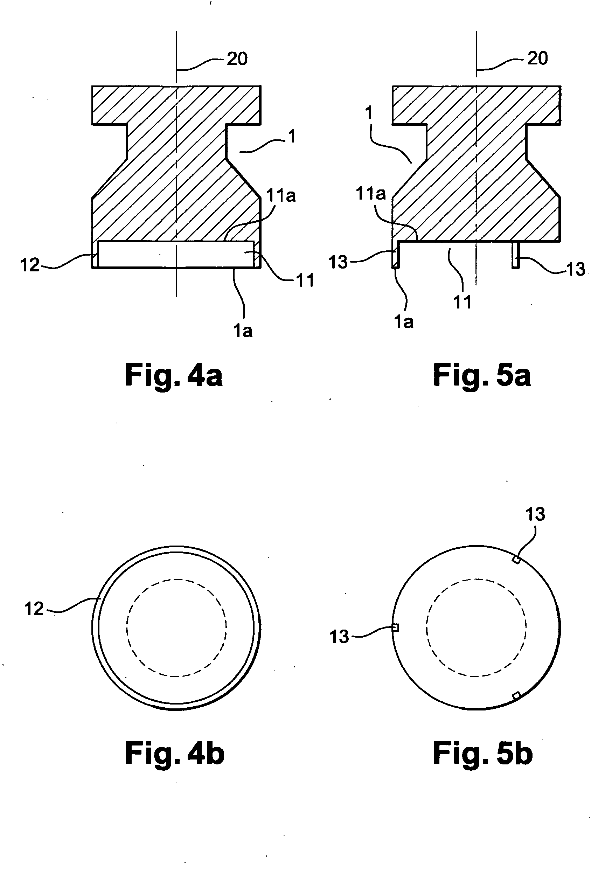

Dans une forme de réalisation, présentée sur les figures 4a et 4b,, l'élément de maintien à distance prend la forme d'une lèvre continue 12 qui de préférence suit le périmètre de la surface inférieure 1 a du plot de traction 1. Il est préférable de réaliser cette lèvre 12 la plus mince possible pour que la différence de surface entre la surface collée, c'est à dire la surface délimitée par l'empreinte du plot de traction 1 réduite de la surface de l'empreinte de la lèvre 12 sur la surface du revêtement 3, et la surface de revêtement 3 découpée, c'est à dire la surface délimitée par l'empreinte du plot de traction 1, soit la plus faible possible pour ne pas fausser la mesure de traction.

Par exemple la réalisation d'une lèvre périphérique 12 sous la forme d'un voile de 0,5mm d'épaisseur ne pose aucun problème technique pour un plot de traction 1 en alliage d'aluminium ou en acier, ce qui représente une réduction de la surface de collage de 0,25% pour un plot de traction 1 de 20mm de diamètre conforme à la norme ISO 4624. Une telle déviation s'avère parfaitement négligeable par rapport aux dispersions de mesures qui sont constatées dans ce type d'essais et peut être pris en compte dans les calculs.

Les éléments de maintien à distance peuvent également prendre la forme de cales d'écartement 13, comme présenté sur les figures 5a et 5b, dont la hauteur assure l'épaisseur de colle 2 souhaitée. Afin que le plan de pose du plot de traction 1 soit parfaitement stable, les cales d'écartement 13 seront prises au moins au nombre de trois, non alignées, et avantageusement les plus écartées que possible. Un nombre plus important de cales d'écartement 13 peut être utilisé et leurs formes importent peu tant que la surface qu'elles occupent sur le revêtement 3 reste négligeable par rapport à la surface de collage du plot de traction 1.

Que les éléments de maintien à distance soient réalisés au moyen d'une lèvre 12, au moyen de cales d'écartement 13 ou de tout autre moyen équivalent, il est essentiel que le plan de pose défini par les surfaces inférieures de ces éléments de maintien à distance soit parfaitement stable et perpendiculaire à l'axe 20 du plot de traction 1 qui correspond à la direction de traction pendant l'essai proprement dit. Une telle qualité est aisément obtenue lorsque les éléments de maintien à distance 12, 13, sont réalisés en laissant la matière correspondante du plot de traction 1 lors de la réalisation, par exemple par usinage, du lamage 11.

Le fond 11 a du lamage 11 est sensiblement parallèle au plan de pose pour obtenir un film de colle homogène d'épaisseur sensiblement constante. Toutefois, les irrégularités de la surface du fond 11 a du lamage 11, par exemple des stries laissées par le passage des outils lors de l'usinage du lamage 11, seront avantageusement conservées ou créées pour améliorer les qualités d'adhérence de la colle sur le plot de traction 1, la liaison entre le plot 1 et la colle 2 devant impérativement être plus résistante que la liaison à tester entre le revêtement 3 et le substrat 4.

Le plot de traction 1 peut en outre être équipé de moyens pour faciliter l'évacuation de l'excès de colle 2 pendant l'opération de collage dudit plot 1 sur l'éprouvette lorsque cette colle 2 est encore fluide.

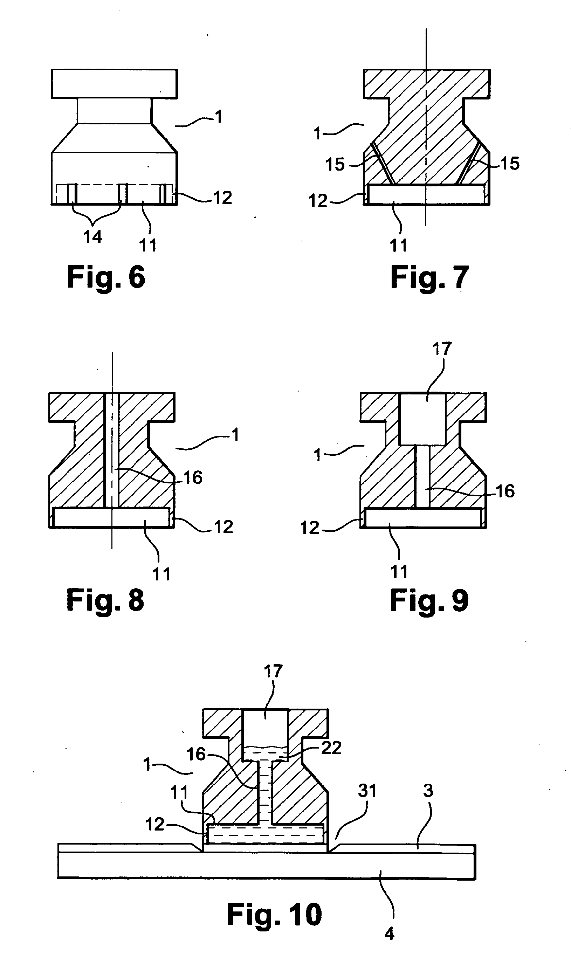

Ainsi la lèvre 12, comme présentée sur la figure 6, peut être interrompue par des passages libres 14 sur une partie de sa longueur et sur tout ou partie de sa hauteur en un ou plusieurs emplacements.

Dans d'autres formes de réalisation, comme présentées sur les figures 7, 8 et 9, ces moyens peuvent prendre la forme d'une ou de plusieurs cheminées d'échappement 15, 16, débouchantes ou non, qui dans leurs parties inférieures sont ouvertes dans l'espace délimité par l'intérieur de la lèvre périphérique 12, le fond 11a du lamage 11 et le plan de pose du plot de traction 1.

Les cheminées d'échappement 15, 16, peuvent déboucher à l'extérieur du plot de traction 1 sur le sommet du plot de traction 1 ou sur la paroi latérale dudit plot.

Lorsque les cheminées d'échappement 15, 16 sont non débouchantes (solutions non représentées sur les dessins), il faut prendre la précaution de leur donner un volume suffisant pour contenir la colle pouvant fluer dans lesdites cheminées d'échappement 15,16, et ceci sans que l'air emprisonné entre la colle 2 et le fond aveugle des cheminées d'échappement 15, 16, ne contrarie la remontée de la colle 2 dans les cheminées 15,16.

Accessoirement une chambre d'expansion 17 peut être prévue pour recueillir une quantité plus importante de colle 2 en excès sans que cette dernière ne déborde du plot de traction 1 par l'extrémité des cheminées d'échappement 15, 16 lorsque celles ci sont débouchantes.

Après que le plot de traction 1 et le revêtement à tester 3 aient été encollés avec la colle 2, le plot de traction 1 est appliqué sur le revêtement à tester 3 avec une force de pression suffisante pour faire fluer l'excès de colle 2 encore à l'état fluide.

La colle 2 fluant par les bords du plot de traction 1 peut aisément être essuyée avant son séchage sans altérer la position du plot de traction 1 qui peut être maintenu en position pendant cette opération au moyen d'un effort modéré grâce à la stabilité que lui confère le plan de pose des moyens de maintien à distance 12, 13. On élimine ainsi aisément le bourrelet de colle 21 non durcie, et l'entaille 31 peut être réalisée dans le revêtement 3 à tester sans difficulté après le durcissement de la colle.

Lorsque le plot de traction 1 est doté de cheminées d'échappement 15, 16, la montée de la colle 22 dans les cheminées 15, 16 et dans les éventuelles chambres d'expansion 17 évite ou au moins limite le besoin d'éliminer la colle 2 fluant.par le bord inférieur du plot de traction 1.

Des essais effectués suivant la norme ISO 4624 avec des plots de traction conformes à l'invention comportant une lèvre 12 périphérique continue et une cheminée d'échappement verticale 16 ont démontré que moins de dix essais suffisent pour obtenir une valeur fiable de la force d'arrachement F du revêtement 3 testé là où plus de quatre vingt dix essais étaient nécessaires avec les plots de traction antérieurs pour obtenir une fiabilité de mesure équivalente.

## Revendications

1. Plot de traction (1 ), d'axe de référence (20) et ayant une surface inférieure (1a), pour essais d'adhérence d'un revêtement (3) sur un substrat (4), ledit plot de traction (1) étant fixé à la surface du revêtement (3) avant essai au moyen d'une colle (2), **caractérisé en ce qu'**il comporte sur la surface inférieure (1a) destinée à être collée sur le revêtement (3) :
- un lamage (11) dont la profondeur correspond sensiblement à l'épaisseur de colle (2) recherchée pour fixer le plot de traction (1) au revêtement (3),
- des moyens de maintien à distance (12, 13) du fond (11a) du lamage (11) pour assurer la stabilité du plot de traction (1) et la perpendicularité de son axe (20) par rapport à la surface du revêtement (3) à tester lorsque la surface inférieure (1a) du plot (1) est appliquée sur la surface du revêtement (3).

2. Plot de traction (1) suivant la revendication 1 dont le lamage (11) est de profondeur sensiblement constante.

3. Plot de traction (1) suivant la revendication 1 ou suivant la revendication 2 dont les moyens de maintien à distance sont constitués par une bordure (12) à la surface inférieure (1a) du plot de traction (1).

4. Plot de traction (1) suivant la revendication 1 ou suivant la revendication 2 dont les moyens de maintien à distance sont constitués de cales (13) répartis à la surface inférieure (1a) du plot de traction (1).

5. Plot de traction (1) suivant l'une quelconque des revendications précédentes dont la moyen (12, 13) de maintien à distance sont situés sur le périmètre de la surface inférieure (1a) du plot de traction (1).

6. Plot de traction (1) suivant l'une des revendications précédentes dans lequel les surfaces inférieures des moyens de maintien à distance (12, 13) déterminent un plan de pose perpendiculaire à l'axe (20) du plot de traction (1).

7. Plot de traction (1) suivant l'une quelconque des revendications précédentes dans lequel les moyens de maintien à distance (12,13) sont obtenus en laissant de la matière du plot de traction (1) lors de la réalisation du lamage (11).

8. Plot de traction (1) suivant l'une quelconque des revendications précédentes comportant des moyens (14, 15, 16) aptes à laisser fluer l'excédant de colle (2) en dehors de la zone de collage définie par l'empreinte du plot de traction (1) sur la surface du revêtement (3).

9. Plot de traction (1) suivant la revendication 8 dont les moyens pour évacuer la colle (2) consistent en un ou plusieurs passages libres (14) réalisées dans la bordure (12) de la surface inférieure (1a) du plot (1).

10. Plot de traction (1) suivant la revendication 8 dont les moyens pour évacuer la colle (2) consistent en un ou plusieurs passages libres (14) entre les cales d'écartement (13).

11. Plot de traction (1) suivant la revendication 8 dont les moyens pour évacuer la colle (2) consistent en une ou plusieurs cheminées d'échappement (15, 16) remontant dans le corps du plot de traction (1).

12. Plot de traction (1) suivant la revendication 11 dont au moins une des cheminées d'échappement (15, 16) débouche à la surface extérieure du plot de traction (1) dans une partie dudit plot au dessus du fond du lamage (11 a).

13. Plot de traction (1) suivant la revendication 11 ou la revendication 12 dont au moins une des cheminées d'échappement (15, 16) débouche dans une chambre d'expansion (17).

14. plot de traction (1) suivant l'une des revendications précédentes dans lequel le fond du lamage (11a) comporte des irrégularités de surface aptes à améliorer l'adhérence de la colle (2).

15. Procédé de collage d'un plot de traction (1) sur un revêtement (3) recouvrant un substrat (4) au moyen d'une colle (2) comportant les étapes suivantes :
- a) application de la colle (2) sur la surface inférieure (1a) du plot de traction (1) et/ou sur la surface du revêtement (3) ;
- b) avant durcissement de la colle (2) positionnement du plot de traction (1) dans la position et à l'emplacement recherchés à la surface du revêtement (3) en exerçant une pression suffisante pour faire fluer la colle (2) ;
- c) attente du durcissement de la colle (2) ;
- d) réalisation d'une entaille (31) dans le revêtement (3) à la périphérie du plot de traction (1) ;
le procédé étant **caractérisé en ce que** :
- e) le plot de traction (1) est conforme à l'une des revendications 1 à14;
- f) la pression exercée lors de l'étape b) est suffisante pour amener les moyens de maintien à distance (12, 13) en appui sur la surface du revêtement (3) ;
- g) les éventuels excédents de colle (2) formant un bourrelet (21) à la surface du revêtement (3) autour du plot de traction (1) sont éliminés entre les étapes b) et c) avant le durcissement de la colle (2) et en maintenant le plot de traction (1) par une pression suffisante pour éviter tout mouvement du plot de traction (1) pendant l'opération d'élimination de l'excédent de colle (2), pour éviter la formation d'un bourrelet (21) de colle durcie.

## Claims

1. Traction pad (1), of reference axis (20) and having a bottom surface (1a), for testing the adhesion of a coating (3) on a substrate (4), said traction pad (1) being fixed to the surface of the coating (3) before the test by means of an adhesive (2), **characterized in that** said pad comprises, on the bottom surface (1a) intended to be bonded to the coating (3):
- a recess (11), the depth of which corresponds substantially to the desired thickness of adhesive (2) for fixing the traction pad (1) to the coating (3); and
- distance-maintaining means (12, 13) on the bottom (11a) of the recess (11) in order to ensure that the traction pad (1) is stable and its axis (20) is perpendicular to the surface of the coating (3) to be tested when the bottom surface (1a) of the pad (1) is applied on the surface of the coating (3).

2. Traction pad (1) according to Claim 1, the recess (11) of which has a substantially constant depth.

3. Traction pad (1) according to Claim 1 or Claim 2, the distance-maintaining means of which are formed by a rim (12) on the bottom surface (1a) of the traction pad (1).

4. Traction pad (1) according to Claim 1 or Claim 2, the distance-maintaining means of which consist of spacers (13) distributed on the bottom surface (1a) of the traction pad (1).

5. Traction pad (1) according to any one of the preceding claims, the distance-maintaining means (12, 13) of which are located on the perimeter of the bottom surface (1a) of the traction pad (1).

6. Traction pad (1) according to one of the preceding claims, in which the bottom surfaces of the distance-maintaining means (12, 13) define a laying plane perpendicular to the axis (20) of the traction pad (1).

7. Traction pad (1) according to any one of the preceding claims, in which the distance-maintaining means (12, 13) are obtained by leaving material of the traction pad (1) in place when producing the recess (11).

8. Traction pad (1) according to any one of the preceding claims, which include means (14, 15, 16) capable of letting the excess adhesive (2) flow away from the bonding area defined by the impression of the traction pad (1) on the surface of the coating (3).

9. Traction pad (1) according to Claim 8, in which the means for removing the adhesive (2) consist of one or more open passages (14) produced in the rim (12) of the bottom surface (1a) of the pad (1).

10. Traction pad (1) according to Claim 8, in which the means for removing the adhesive (2) consists of one or more open passages (14) between the spacers (13).

11. Traction pad (1) according to Claim 8, in which the means for removing the adhesive (2) consist of one or more escape ducts (15, 16) rising in the body of the traction pad (1).

12. Traction pad (1) according to Claim 11, at least one of the escape ducts (15, 16) of which opens onto the external surface of the traction pad (1) in a portion of said pad above the bottom of the recess (11a).

13. Traction pad (1) according to Claim 11 or Claim 12, at least one of the escape ducts (15, 16) of which opens into an expansion chamber (17).

14. Traction pad (1) according to one of the preceding claims, in which the bottom of the recess (11a) includes surface irregularities capable of improving the adhesion of the adhesive (2).

15. Method of bonding a traction pad (1) to a coating (3) covering a substrate (4) by means of an adhesive (2), comprising the following steps:
- a) adhesive (2) is applied to the bottom surface (1a) of the traction pad (1) and/or to the surface of the coating (3);
- b) before the adhesive (2) cures, the traction pad (1) is placed in the desired position and at the desired location on the surface of the coating (3) while exerting sufficient pressure to make the adhesive (2) creep;
- c) the adhesive (2) is left until it has cured; and
- d) a notch (31) is produced in the coating (3) around the periphery of the traction pad (1), the method being **characterized in that**:
- e) the traction pad (1) is in accordance with one of Claims 1 to 14;
- f) the pressure exerted during step b) is sufficient to make the distance-maintaining means (12, 13) bear on the surface of the coating (3); and
- g) the excess adhesive (2) forming a bead (21) on the surface of the coating (3) around the traction pad (1) is removed between steps b) and c) before the adhesive (2) cures and keeping the traction pad (1) in place by applying sufficient pressure to avoid any movement of the traction pad (1) during the operation of removing the excess adhesive (2), in order to prevent the formation of a bead (21) of cured adhesive.

## Patentansprüche

1. Zugklötzchen (1) mit einer Bezugsachse (20) und einer unteren Fläche (1a) für Hafttests eines Belags (3) auf einem Substrat (4), wobei das Zugklötzchen (1) vor dem Test mittels eines Klebstoffs (2) an der Fläche des Belags (3) befestigt wird, **dadurch gekennzeichnet, dass** es an der unteren Fläche (1a), die dazu bestimmt ist, auf den Belag (3) geklebt zu werden, aufweist:
- eine Senkung (11), deren Tiefe im Wesentlichen der gesuchten Klebstoffdicke (2) zum Befestigen des Zugklötzchens (1) am Belag (3) entspricht,
- Einrichtungen (12, 13), um den Boden (11a) der Senkung (11) in Abstand zu halten, um die Stabilität des Zugklötzchens (1) und die lotrechte Anordnung seiner Achse (20) bezüglich der Fläche des zu testenden Belags (3) zu gewährleisten, wenn die untere Fläche (1a) des Klötzchens (1) auf die Fläche des Belags (3) aufgebracht wird.

2. Zugklötzchen (1) nach Anspruch 1, dessen Senkung (11) eine im Wesentlichen konstante Tiefe hat.

3. Zugklötzchen (1) nach Anspruch 1 oder Anspruch 2, dessen Abstandshalteeinrichtungen aus einer Randleiste (12) an der unteren Fläche (1a) des Zugklötzchens (1) bestehen.

4. Zugklötzchen (1) nach Anspruch 1 oder Anspruch 2, dessen Abstandshalteeinrichtungen aus Keilen (13) bestehen, die an der unteren Fläche (1a) des Zugklötzchens (1) verteilt sind.

5. Zugklötzchen (1) nach einem der vorhergehenden Ansprüche, dessen Abstandshalteeinrichtungen (12, 13) sich auf dem Umfang der unteren Fläche (1a) des Zugklötzchens (1) befinden.

6. Zugklötzchen (1) nach einem der vorhergehenden Ansprüche, bei dem die unteren Flächen der Abstandshalteeinrichtungen (12, 13) eine Einbauebene lotrecht zur Achse (20) des Zugklötzchens (1) bestimmen.

7. Zugklötzchen (1) nach einem der vorhergehenden Ansprüche, bei dem die Abstandshalteeinrichtungen (12, 13) erhalten werden, indem bei der Herstellung der Senkung (11) Material des Zugklötzchens (1) übrig gelassen wird.

8. Zugklötzchen (1) nach einem der vorhergehenden Ansprüche, das Einrichtungen (14, 15, 16) aufweist, die den Klebstoffüberschuss (2) aus der Klebzone heraus kriechen lassen, die vom Eindruck des Zugklötzchens (1) auf der Fläche des Belags (3) definiert wird.

9. Zugklötzchen (1) nach Anspruch 8, dessen Einrichtungen zum Abführen des Klebstoffs (2) aus einem oder mehreren freien Durchgängen (14) bestehen, die in der Randleiste (12) der unteren Fläche (1a) des Klötzchens (1) hergestellt sind.

10. Zugklötzchen (1) nach Anspruch 8, dessen Einrichtungen zum Abführen des Klebstoffs (2) aus einem oder mehreren freien Durchgängen (14) zwischen den Distanzkeilen (13) bestehen.

11. Zugklötzchen (1) nach Anspruch 8, dessen Einrichtungen zum Abführen des Klebstoffs (2) aus einem oder mehreren Auslassschächten (15, 16) bestehen, die im Körper des Zugklötzchens (1) hochsteigen.

12. Zugklötzchen (1) nach Anspruch 11, von dem mindestens einer der Auslassschächte (15, 16) an der Außenfläche des Zugklötzchens (1) in einem Bereich des Klötzchens über dem Boden der Senkung (11a) mündet.

13. Zugklötzchen (1) nach Anspruch 11 oder Anspruch 12, von dem mindestens einer der Auslassschächte (15, 16) in einer Dehnungskammer (17) mündet.

14. Zugklötzchen (1) nach einem der vorhergehenden Ansprüche, bei dem der Boden der Senkung (11a) Flächenunregelmäßigkeiten aufweist, die das Haften des Klebstoffs (2) verbessern können.

15. Verfahren zum Kleben eines Zugklötzchens (1) auf einen ein Substrat (4) bedeckenden Belag (3) mittels eines Klebstoffs (2), das die folgenden Schritte aufweist:
- a) Aufbringen des Klebstoffs (2) auf die untere Fläche (1a) des Zugklötzchens (1) und/oder auf die Fläche des Belags (3);
- b) vor dem Härten des Klebstoffs (2), Positionieren des Zugklötzchens (1) in der gesuchten Position und an der gesuchten Stelle auf der Fläche des Belags (3) durch Ausüben eines ausreichenden Drucks, um den Klebstoff (2) kriechen zu lassen;
- c) Abwarten des Härtens des Klebstoffs (2);
- d) Herstellen eines Einschnitts (31) im Belag (3) am Umfang des Zugklötzchens (1);
wobei das Verfahren **dadurch gekennzeichnet ist, dass**:
- e) das Zugklötzchen (1) einem der Ansprüche 1 bis 14 entspricht;
- f) der im Schritt b) ausgeübte Druck ausreichend ist, um die Abstandshalteeinrichtungen (12, 13) in Auflage auf die Fläche des Belags (3) zu bringen;
- g) die eventuellen Klebstoffübersahüsse (2), die einen Wulst (21) an der Fläche des Belags (3) um das Zugklötzchen (1) herum bilden, zwischen den Schritten b) und c) vor dem Härten des Klebstoffs (2) entfernt werden, indem das Zugklötzchen (1) durch einen ausreichenden Druck gehalten wird, um jede Bewegung des Zugklötzchens (1) während des Vorgangs des Entfernens des Klebstoffüberschusses (2) zu verhindern, um die Bildung eines Wulsts (21) von gehärtetem Klebstoff zu verhindern.
